# EUROPEAN PATENT SPECIFICATION

(11) **EP 0 761 571 B1**
(45) Date of publication and mention of the grant of the patent: **26.07.2000**
(21) Application number: 96660055.3
(22) Date of filing: 09.09.1996
(51) Int. Cl.: A21C 9/08, B65G 37/00, B65G 47/34

(54) **Method and apparatus for depositing products continuously fed by a delivering conveyor onto a platform**
Verfahren und Gerät zum Ablegen von kontinuierlich von einem Übergabeförderer zugeführten Produkten auf eine Plattform
Procédé et appareil pour produits alimentés en continu par un convoyeur de transfert sur une plateforme

(30) Priority: 11.09.1995 FI 954254
(43) Date of publication of application: 12.03.1997
(73) Proprietor: LT-Kone Oy, 02630 Espoo (FI)
(72) Inventor: Lammela, Martti, 21380 Aura (FI)
(74) Representative: Eriksson, Svante Johan Christer

(56) References cited:
- AT-B- 272 234
- DE-A- 2 647 766
- DE-A- 3 310 250
- DE-B- 2 457 046

## Description

The present invention relates to a method and an apparatus for depositing products, which are continuously transported by a delivering conveyor of a transfer track, in batches of predetermined size from said delivering conveyor of constant transfer track speed onto a platform kept stationary with respect to the motion direction of said delivering conveyor, as known e.g. from DE-A-3 310 250. An example of the applications of the invention is to be found in the delivery of bakery product such as pizza/pie crusts, flat bread and the like onto a platform such as an aerating or baking sheet.

When such products are made in large quantities using automated machinery, the product leaves the machinery as an essentially continuous flow, or alternatively, in batches of a large number of the products. These products must next be deposited onto a baking sheet so that products will not be subjected to any shape-deforming impacts. Conventionally, for such a depositing task are used conveyors designed to retreat from below the products being deposited, in a direction opposite to the process direction of the products, whereby the moving element of the conveyor is kept in continuous motion. Here, the products are subjected to a substantial deforming force as it meets the stationary platform at a relatively high speed of about 300 mm/s typical. Resultingly, a problem arises particularly when depositing products which are thin and wide.

It is an object of the present invention to overcome the above-mentioned problem. To achieve this goal a basic idea of the invention is that a depositing conveyor which is stationary with respect to the platform should be used for depositing the products. Herein, the handling of the continuous incoming flow of new product presents a difficulty. Namely, the depositing conveyor cannot receive products from the delivering conveyor during the time the products are being deposited by the former conveyor, whereby during this depositing step a buffer must be arranged in such a way for the flow of products being delivered from a previous production step that this product buffer can be delivered onto the depositing conveyor after the ongoing depositing step has been completed.

According to a second basic idea of the invention, the buffer storage of incoming products is performed at the delivering conveyor during the depositing step by means of extending the delivering conveyor in the direction of the product flow using a speed of extension higher than the conveying speed of the products. The implementation of the invention requires from the two cooperating conveyors, namely, the delivering conveyor and the depositing conveyor, certain basic functions that also must be mutually synchronized to achieve fault-free depositing cycles.

The characterizing features of the method according to the invention are disclosed in the characterizing part of claim 1 and the characterizing features of the apparatus according to the invention are disclosed in the characterizing part of claim 7, respectively.

In the following the invention will be described in greater detail by making reference to the appended drawings in which
Figure 1 is a schematic side view of an apparatus suitable for implementing the method according to the invention, herein starting the functional steps;
Figure 2 is a side view of the apparatus at the starting phase of the depositing step;
Figure 3 is a side view of the apparatus at the operating phase of the depositing step laying off product onto a platform;
Figure 4 is a side view of the apparatus at a phase following the concluded depositing step; and
Figure 5 is a top view of the apparatus at the phase shown in Fig. 2.

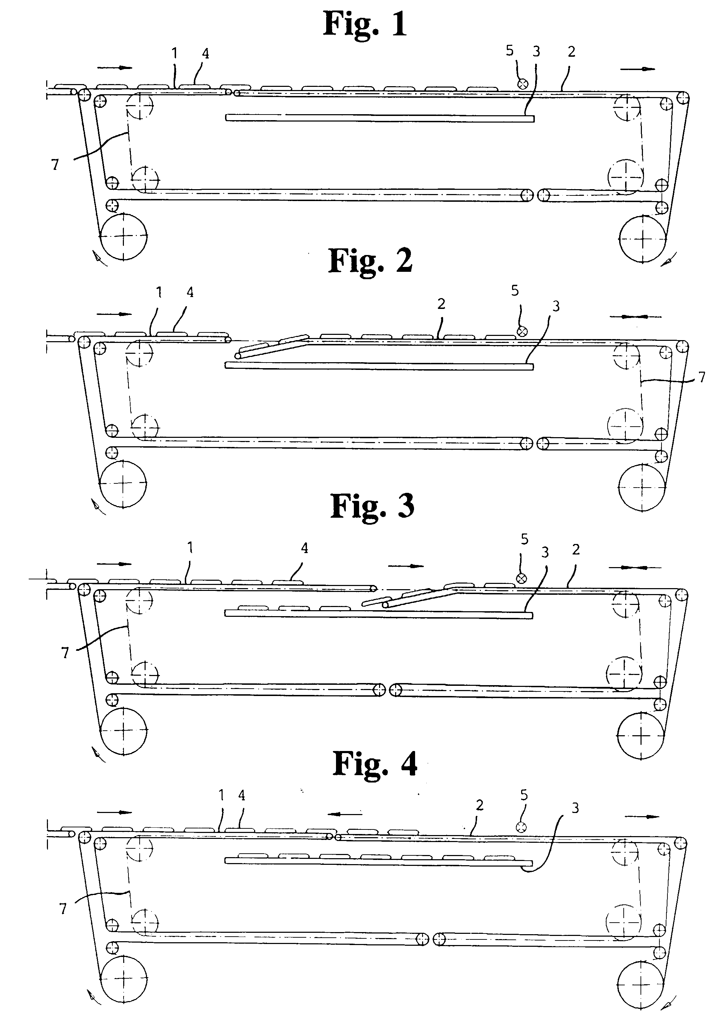

The apparatus shown in Fig. 1 for performing the method according to the invention comprises two extensible conveyors operating in opposite directions, i.e. a delivering conveyor 1 and a depositing conveyor 2, both cooperating above a platform 3 for the purpose of depositing products 4 onto the platform 3. In the illustrated system, the platform 3 may be an aerating sheet for pizza crusts. While the platform 3 is stationary with respect to the transport directions of the conveyors 1 and 2, it is arranged cyclically movable laterally to the said transport direction of the conveyors during the intervals between the successive depositing steps for the purpose of moving the deposited products 4 to further processing.

The products 4 to be deposited are received from a production machinery transported at an essentially constant speed and as an essentially constant flow by the delivering conveyor 1. The conveyors 1 and 2 as shown in Fig. 1 are in the starting position of the operation whereby the delivering conveyor 1 transporting the products is in a totally retracted position and the depositing conveyor 2 is in a totally extended position. The band acting as the transporting means of the depositing conveyor 2 is actuated to move in the same direction and at the same speed with the band acting as the transporting means of the delivering conveyor 1. The conveyors 1 and 2 are driven at the normal transport speed in the transfer configuration of products shown in Fig. 1, until the amount of products transferred onto the depositing conveyor 2 is equal to the predetermined batch of products to be deposited onto the platform 3. Subsequently, the system is switched to the operating step shown in Fig. 2.

Here, the transfer motion of the transporting means of the depositing conveyor 2 is stopped, and the tip of the depositing conveyor 2 is lowered into contact with the platform 3. By contrast, the transport means of the delivering conveyor 1 is allowed to continue its transport motion at its previous speed. The product footprint on the delivering conveyor 1 required for this continuous transport motion is accomplished by arranging the delivering conveyor 1 to perform an extension motion in the transport direction with a speed of extension larger than that of the transport motion. This extension motion must be continued as long as the depositing conveyor 2 carries out its depositing step and thus is incapable of receiving products. This condition causes that the depositing function of the depositing conveyor 2 must be designed appreciably fast in regard to said transfer motion, meaning that the speed of the retraction motion of the depositing conveyor 2 shown in Fig. 3 must be significantly faster than the transfer motion of the delivering conveyor 1.

While the transport speed is advantageously set in the range from approx. 50 mm/s to approx. 300 mm/s and the speed of the extension and retraction motion, respectively, is advantageously approx. 800 mm/s, also higher and slower speeds are feasible.

After the depositing conveyor 2 has completed the depositing step of products 4 onto the platform 3, the tip of the depositing conveyor 2 is elevated into receiving adjacency with the delivering tip of the delivering conveyor 1 for receiving a new lot of products. Simultaneously, the transfer motion of the transport means of the depositing conveyor 2 is started, and the tips of both conveyors 1 and 2 are synchronously extended and retracted, respectively, during the motion toward the home position (Fig. 1) of the apparatus. The adjacently intimate delivering contact between both conveyors 1 and 2 is advantageously maintained by implementing the respective extension/retraction motions with the help of an endless, electric-motor-driven chain pair passed over the end roll sprockets of both conveyors, respectively. During this return motion, the retraction of the delivering conveyor 1 into its home position discharges the products resting thereon onto the depositing conveyor 2. After the above-described cycle is completed and the leading end of the flow of new products has reached a sensor 5 in conjunction with the depositing conveyor 2, which sensor 5 is adapted above the rear end of the platform 3, the next depositing step can be started from the situation shown in Fig. 2, comprising the phases of stopping the conveyor 2, lowering the same into depositing contact with the platform 3, and starting the extension and retraction motions, respectively, of the conveyors 1 and 2.

Using a hydraulic or pneumatic cylinder, the position of the depositing tip of the depositing conveyor 2 is advantageously arranged lowerable into laying-off contact with the platform 3 and again elevatable into receiving contact with the delivering tip of the delivering conveyor 1.

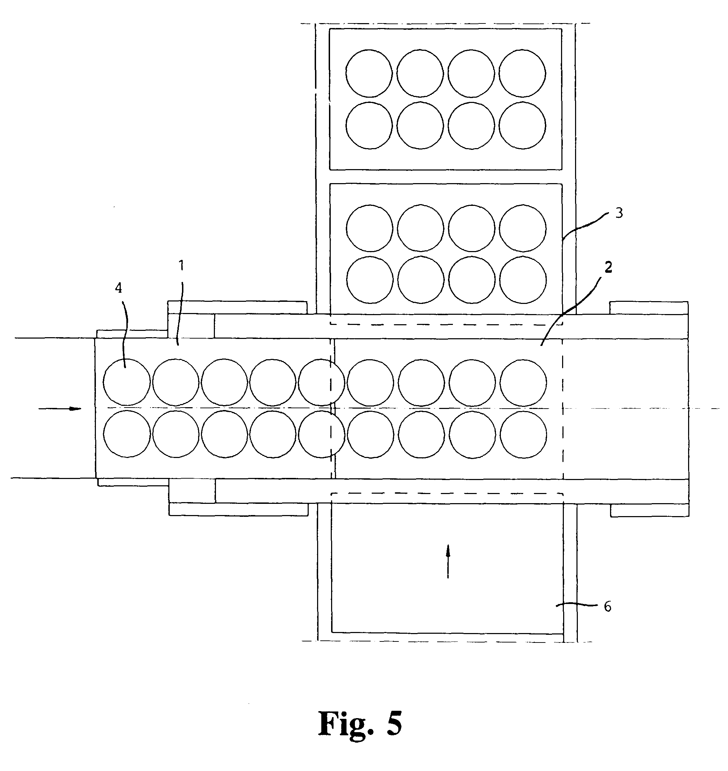

Now referring to Fig. 5, the apparatus layout shown therein has the conveyor 1 adapted to deliver products 4 in two rows, and the products are then deposited in batches of four successive units onto the platform 3, which in turn is placed onto a conveyor. This conveyor 6 is adapted to perform a synchronized cyclic transport motion to bring a new platform under the conveyor 2 during each operating cycle of the apparatus. During the actual depositing step, the conveyor 6 must be kept stationary.

The drive for the extension and retraction motions of the delivering tip and the depositing tip of the conveyors, respectively, is implemented by means of a bidirectionally rotatable motor driving a common endless chain pair 7 to which the end roll sprockets of the delivering conveyor 1 and the depositing conveyor 2 are fixed. This chain pair 7 forms an essentially rectangular or trapezoidal path, whereby the transport belts of the delivering conveyor 1 and the depositing conveyor 2 form two opposed, horizontally lying U-shaped tracks.

The extension/retraction strokes of the delivering tip and the depositing tip of the conveyors, respectively, are adapted to correspond to the dimension of the platform 3 in the transport direction of the conveyor combination.

## Claims

1. A method of depositing products (4), which are continuously transported by a delivering conveyor (1) of a transfer track, in batches of predetermined size from said delivering conveyor (1) of constant transfer track speed onto a platform (3) kept stationary with respect to the motion direction of said delivering conveyor, **characterized** in that said products (4) are delivered in batches onto a depositing conveyor (2), which is operated at the same transfer speed with said conveyor of constant transfer track speed, the transfer motion of said depositing conveyor is stopped after the completed reception of said batch, the depositing tip of said depositing conveyor (2) is brought into laying-off contact with said stationary platform (3), and the depositing step is carried out by retracting said depositing tip in the transfer direction of said delivering conveyor (1) from under the objects of the batch being deposited using a retraction speed higher than the transfer track speed of the delivering conveyor simultaneously as the delivering conveyor (1) of constant transfer track speed is extended in the transfer direction at an extension speed higher than the transfer speed thus providing a buffer storage for products (4) flowing from the production machinery during the depositing step, after completion of which depositing step the depositing conveyor (2) is restarted, the depositing tip thereof is elevated into receiving adjacency with the delivering tip of the delivering conveyor (1) and said two conveyor tips are returned in intimate adjacency into their home position.

2. A method as defined in claim 1, **characterized** in that the entire batch to be deposited is detected received onto the depositing conveyor (2) when the first one of products (4) has reached a sensor (5) adapted in conjunction with the depositing conveyor (1), above the rear end of the stationary platform (3).

3. A method as defined in claim 1 or 2, **characterized** in that a plurality of parallel rows of products are transferred on the delivering conveyor (1).

4. A method as defined in any of claims 1 - 3, **characterized** in that the transfer speed of the conveyor (1) is advantageously set in the range from approx. 50 mm/s to approx. 300 mm/s.

5. A method as defined in claim 4, **characterized** in that the delivering tip of the delivering conveyor (1) and the depositing tip of the depositing conveyor (2), respectively, are arranged to extend and/or retract at a speed of 800 mm/s during the depositing and retracting steps.

6. A method as defined in any of the preceeding claims, **characterized** in that the stationary platforms (3) serving to receive the deposited batches are located on a third conveyor band (6) placed below the depositing tip of the depositing conveyor (2) and adapted to be stepwise transferrable.

7. An apparatus for depositing products, which are fed from a continuously operating transfer track, in batches of predetermined size from said transfer track onto a platform (3) kept stationary with respect to the motion direction of said transfer track and located below said track, said apparatus comprises a delivering conveyor (1), which is arranged to operate continuously at the transfer track speed of the feeding machinery, **characterized** in that said conveyor incorporates a delivering tip adapted extendable and retractable at a speed higher than the transfer track speed, and a depositing conveyor (2) cooperating with said delivering conveyor and incorporating a depositing tip adapted extendable and retractable with a motion complementary to that of said delivering tip of said delivering conveyor, whereby said depositing tip is arranged to follow a trajectory in which it will at the leading edge of said platform (3) be lowered into laying-off contact with said platform (3) and be retracted to the trailing edge of said platform (3) so as to maintain said intimate laying-off contact with the platform and, at reaching said trailing edge of said platform (3), be elevated into an intimate receiving adjacency with the tip of said delivering conveyor and, while maintaining said adjacency, be extended back as far as to said leading edge of said platform (3), and that said depositing conveyor (2) is arranged to move at the transfer track speed or stay entirely stopped depending on the position of said depositing tip of said depositing conveyor.

8. An apparatus as defined in claim 7, **characterized** in that the drive for the extension and retraction motions of the delivering tip and the depositing tip of the conveyors is implemented by means of a bidirectionally rotatable motor driving a common endless chain pair (7) to which the end roll sprockets of the delivering conveyor (1) and the depositing conveyor (2) are fixed.

9. An apparatus as defined in claim 8, **characterized** in that said depositing conveyor (2) incorporates a hydraulic or pneumatic cylinder adapted to elevate and lower the depositing tip of said conveyor.

10. An apparatus as defined in claim 9, **characterized** in that the transport belts of the delivering conveyor (1) and the depositing conveyor (2) form two opposed, horizontally lying U-shaped tracks.

11. An apparatus as defined in claim 10, **characterized** in that the chain pair (7) forms an essentially rectangular or trapezoidal path.

12. An apparatus as defined in any of the preceeding claims 7 - 11, **characterized** in that below the depositing tip of the depositing conveyor (2) is located a third conveyor band (6), which serves to support said stationary platforms (3) receiving the deposited batches and is adapted stepwise transferrable in a transverse direction relative to said transfer track.

## Patentansprüche

1. Verfahren, um Produkte (4), die kontinuierlich durch einen Lieferförderer (1) einer Förderbahn transportiert werden, von dem genannten Lieferförderer (1) konstanter Förderbahngeschwindigkeit in Partien vorbestimmter Größe auf einer Plattform (3) abzulegen, die relativ zu der Bewegungsrichtung des genannten Lieferförderers stationär gehalten ist, dadurch gekennzeichnet, daß die genannten Produkte (4) in Partien auf einen Ablegeförderer (2) angeliefert werden, der mit der gleichen Transportgeschwindigkeit betrieben wird wie der genannte Förderer konstanter Förderbahngeschwindigkeit, daß die Transportbewegung des genannten Ablegeförderers nach dem vollständigen Erhalt der genannten Partie angehalten wird, daß das Ablegeende des genannten Ablegeförderers (2) in Ablegekontakt mit der genannten stationären Plattform (3) gebracht und der Ablegeschritt ausgeführt wird, indem das genannte Ablegeende in der Förderrichtung des genannten Lieferförderers (1) von unterhalb der Produkte der Partie, die abgelegt wird, zurückgezogen wird, indem eine Rückzugsgeschwindigkeit benutzt wird, die höher ist als die Förderbahngeschwindigkeit des Lieferförderers, während gleichzeitig der Lieferförderer (1) konstanter Förderbahngeschwindigkeit in der Transportrichtung mit einer Auszugsgeschwindigkeit ausgezogen wird, die höher ist als die Transportgeschwindigkeit, um somit eine Pufferspeicherung für Produkte (4) zu bilden, die von der Produktionsmaschinerie während des Ablegeschrittes zuströmen, wobei nach Abschluß dieses Ablegeschrittes der Ablegeförderer (2) neu gestartet wird, dessen Ablegeende bis zur Empfangs-Nachbarschaft zum Lieferende des Lieferförderers (1) angehoben wird und die genannten zwei Fördererenden in enger Nachbarschaft miteinander in ihre Ausgangsstellung zurückgeführt werden.

2. Verfahren wie in Anspruch 1 definiert, dadurch gekennzeichnet, daß die gesamte abzulegende Partie als auf dem Ablegeförderer (2) erhalten erkannt wird, wenn das erste der Produkte (4) einen Sensor (5) erreicht hat, der in Verbindung mit dem Ablegeförderer (2) oberhalb des hinteren Endes der stationären Plattform (3) eingerichtet ist.

3. Verfahren wie in Anspruch 1 oder 2 definiert, dadurch gekennzeichnet, daß eine Mehrzahl paralleler Reihen von Produkten auf dem Lieferförderer (1) transportiert werden.

4. Verfahren wie in irgendeinem der Ansprüche 1 - 3 definiert, dadurch gekennzeichnet, daß die Fördergeschwindigkeit des Förderers (1) auf den Bereich von etwa 50mm/s bis etwa 300mm/s eingestellt ist.

5. Verfahren wie in Anspruch 4 definiert, dadurch gekennzeichnet, daß das Ablegeende des Lieferförderers (1) und das Ablegeende des Ablegeförderers (2) so angeordnet sind, daß sie sich mit einer Geschwindigkeit von 800mm/s während der Ablege- und Rückziehschritte ausziehen und/oder zurückziehen.

6. Verfahren wie in irgendeinem der vorausgehenden Ansprüche definiert, dadurch gekennzeichnet, daß die stationären Plattformen (3), welche zur Aufnahme der abgelegten Partien dienen, auf einem dritten Förderband (6) angeordnet sind, das unterhalb des Ablegeendes des Ablegeförderers (2) angeordnet und dazu eingerichtet ist, um schrittweise transportierbar zu sein.

7. Gerät, um Produkte, die von einer kontinuierlich arbeitenden Förderbahn zugeführt werden, in Partien vorbestimmter Größe von der genannten Förderbahn auf einer Plattform (3) abzulegen, die relativ zur Bewegungsrichtung der genannten Förderbahn stationär gehalten und unterhalb der genannten Bahn angeordnet ist, wobei besagtes Gerät einen Lieferförderer (1) aufweist, der dazu eingerichtet ist, um kontinuierlich mit der Förderbahngeschwindigkeit der Zulieferungs-Maschinerie zu arbeiten, dadurch gekennzeichnet, daß genannter Förderer ein Lieferende aufweist, das mit einer Geschwindigkeit ausziehbar und zurückziehbar eingerichtet ist, die höher ist als die Förderbahngeschwindigkeit, und mit einem Ablegeförderer (2), der mit dem genannten Lieferförderer zusammenwirkt und ein Ablegeende aufweist, das mit einer Bewegung ausziehbar und zurückziehbar ist, die komplementär zu derjenigen des genannten Lieferendes des genannten Lieferförderers ist, wobei das genannte Ablegeende so angeordnet ist, daß es einer Bewegungsbahn folgt, in der es am vorderen Rand der genannten Plattform in den Ablegekontakt mit der genannten Plattform abgesenkt und zu dem hinteren Rand der genannten Plattform (3) zurückgezogen wird, um den genannten innigen Ablegekontakt mit der Plattform beizubehalten, daß es bei Erreichen des genannten hinteren Randes der genannten Plattform (3) in eine enge Empfangs-Nachbarschaft mit dem Ende des genannten Lieferförderers angehoben und, während diese Nachbarschaft beibehalten wird, nach rückwärts bis zu dem genannten vorderen Rand der genannten Plattform ausgezogen wird, und daß der genannte Ablegeförderer (2) so eingerichtet ist, um sich mit der Förderbahngeschwindigkeit zu bewegen oder völlig angehalten zu verbleiben, je nach Position des genannten Ablegeendes des genannten Ablegeförderers.

8. Gerät wie in Anspruch 7 definiert, dadurch gekennzeichnet, daß der Antrieb für die Auszugs- und Rückzugsbewegungen des Lieferendes und des Ablegeendes der Förderer vermittels eines in beiden Richtungen drehbaren Motors verwirklicht ist, der ein gemeinsames Endloskettenpaar (7) antreibt, mit dem Walzen-Endkettenräder des Lieferförderers (1) und des Ablegeförderers (2) verbunden sind.

9. Gerät wie in Anspruch 8 definiert, dadurch gekennzeichnet, daß der genannte Ablegeförderer (2) einen hydraulischen oder pneumatischen Zylinder beinhaltet, der dazu eingerichtet ist, das Ablegeende des genannten Förderers anzuheben und abzusenken.

10. Gerät wie in Anspruch 9 definiert, dadurch gekennzeichnet, daß die Förderbänder des Lieferförderers (1) und des Ablegeförderers (2) zwei einander entgegengesetzte, horizontal liegende, U-förmige Bahnen bilden.

11. Gerät wie in Anspruch 10 definiert, dadurch gekennzeichnet, daß das Kettenpaar (7) eine im wesentlichen rechteckige oder trapezförmige Bahn bildet.

12. Gerät wie in irgendeinem der vorausgehenden Ansprüche 7 - 11 definiert, dadurch gekennzeichnet, daß unterhalb des Ablegeendes des Ablegeförderers (2) ein drittes Förderband (6) angeordnet ist, das dazu dient, die genannten stationären Plattformen (3) zu tragen, welche die abgelegten Partien aufnehmen, und dazu eingerichtet ist, um schrittweise in einer relativ zu der genannten Förderbahn querverlaufenden Richtung bewegt zu werden.

## Revendications

1. Procédé de dépôt de produits (4), qui sont transportés d'une manière continue par un transporteur de fourniture (1) d'une voie de transfert, par lots d'une taille préfixée, dudit transporteur de fourniture (1), à vitesse de voie de transfert constante, jusque sur une plate-forme (3) maintenue fixe vis-à-vis de la direction de mouvement du transporteur de fourniture, caractérisé en ce que les produits (4) sont fournis par lots sur un transporteur de dépôt (2), qui est commandé à la même vitesse de transfert que le transporteur à vitesse de voie de transfert constante, le mouvement de transfert du transporteur de dépôt étant arrêté après réception complète du lot, l'extrémité de dépôt du transporteur de dépôt (2) est amenée en contact de dépôt avec la plate-forme fixe (3), et l'opération de dépôt est exécutée en rétractant l'extrémité de dépôt suivant la direction de transfert du transporteur de fourniture (1), d'au-dessous des objets du lot en cours de dépôt, en utilisant une vitesse de rétraction supérieure à la vitesse de voie de transfert du transporteur de fourniture, tandis qu'en même temps, le transporteur de fourniture (1) à vitesse de voie de transfert constante est étendu suivant la direction de transfert à une vitesse d'extension supérieure à la vitesse de transfert, réalisant ainsi une accumulation tampon de produits (4) en flux à partir de l'appareillage de production pendant l'opération de dépôt, opération de dépôt après l'achèvement de laquelle le transporteur de dépôt (2) est redémarré, son extrémité de dépôt est soulevée en proximité de réception avec l'extrémité de fourniture du transporteur de fourniture (1) et les deux extrémités de transporteur sont ramenées en proximité étroite dans leur position de base.

2. Procédé tel que défini à la revendication 1, caractérisé en ce que le lot entier à déposer est détecté comme étant reçu sur le transporteur de dépôt (2) lorsque le premier des produits (4) a atteint un détecteur (5) adapté en combinaison avec le transporteur de dépôt (2), au-dessus de l'extrémité arrière de la plate-forme fixe (3).

3. Procédé tel que défini à la revendication 1 ou 2, caractérisé en ce que plusieurs rangées parallèles de produits sont transférées sur le transporteur de fourniture (1).

4. Procédé tel que défini à l'une quelconque des revendications 1 - 3, caractérisé en ce que la vitesse de transfert du transporteur (1) est avantageusement fixée dans la fourchette d'approximativement 50 mm/s à approximativement 300 mm/s.

5. Procédé tel que défini à la revendication 4, caractérisé en ce que l'extrémité de fourniture du transporteur de fourniture (1) et l'extrémité de dépôt du transporteur de dépôt (2) sont respectivement agencées de façon à s'étendre et/ou se rétracter à une vitesse de 800 mm/s pendant les opérations de dépôt et de rétraction.

6. Procédé tel que défini à l'une quelconque des revendications précédentes, caractérisé en ce que les plates-formes fixes (3) servant à recevoir les lots déposés sont disposées sur un troisième transporteur à bande (6) placé au-dessous de l'extrémité de dépôt du transporteur de dépôt (2) et adapté à pouvoir être transféré pas à pas.

7. Appareil de dépôt de produits, qui sont acheminés à partir d'une voie de transfert fonctionnant d'une manière continue, par lots d'une taille préfixée, de ladite voie de transfert jusque sur une plate-forme (3) maintenue fixe vis-à-vis de la direction de mouvement de la voie de transfert et disposée au-dessous de la voie, l'appareil comprenant un transporteur de fourniture (1), qui est agencé de façon à fonctionner d'une manière continue à la vitesse de voie de transfert de l'appareillage d'acheminement, caractérisé en ce que le dit transporteur comporte une extrémité de fourniture adaptée à pouvoir s'étendre et se rétracter à une vitesse supérieure à la vitesse de voie de transfert, et un transporteur de dépôt (2) coopérant avec le transporteur de fourniture et comportant une extrémité de dépôt adaptée à pouvoir s'étendre et se rétracter avec un mouvement complémentaire de celui de l'extrémité de fourniture du transporteur de fourniture, tandis que l'extrémité de dépôt est agencée de façon à suivre une trajectoire sur laquelle elle va, au bord avant de la plate-forme (3), être abaissée en contact de dépôt avec la plate-forme (3) et être rétractée jusqu'au bord arrière de la plate-forme (3) de manière à maintenir le contact étroit de dépôt avec la plate-forme et va, lorsqu'elle atteint ledit bord arrière de la plate-forme (3), être élevée jusqu'en proximité étroite de réception avec l'extrémité du transporteur de fourniture et, tout en maintenant la proximité, être étendue en retour jusqu'au bord avant de la plate-forme (3), et en ce que le transporteur de dépôt (2) est agencé de façon à se déplacer à la vitesse de voie de transfert ou rester entièrement arrêté en fonction de la position de l'extrémité de dépôt du transporteur de dépôt.

8. Appareil tel que défini à la revendication 7, caractérisé en ce que la commande des mouvements d'extension et de rétraction de l'extrémité de fourniture et de l'extrémité de dépôt des transporteurs et mise en oeuvre au moyen d'un moteur rotatif bidirectionnel entraînant une paire de chaînes sans fin (7) commune à laquelle sont fixés les pignons à chaîne de rouleau d'extrémité du transporteur de fourniture (1) et du transporteur de dépôt (2).

9. Appareil tel que défini à la revendication 8, caractérisé en ce que le transporteur de dépôt (2) comporte un vérin hydraulique ou pneumatique adapté pour élever et abaisser l'extrémité de dépôt du transporteur.

10. Appareil tel que défini à la revendication 9, caractérisé en ce que les bandes de transport du transporteur de fourniture (1) et du transporteur de dépôt (2) forment deux voies opposées en forme de U disposées horizontalement.

11. Appareil tel que défini à la revendication 10, caractérisé en ce que la paire de chaînes (7) forme une trajectoire essentiellement rectangulaire ou trapézoïdale.

12. Appareil tel que défini à l'une quelconque des revendications précédentes 7 - 11, caractérisé en ce qu'il est prévu, disposée au-dessous de l'extrémité de dépôt du transporteur de dépôt (2), une troisième bande de transporteur (6) qui sert à soutenir les plates-formes fixes (3) recevant les lots déposés et est adaptée à pouvoir être transférée pas à pas dans une direction transversale vis-à-vis de la voie de transfert.
